# EUROPEAN PATENT APPLICATION

(11) **EP 3 267 021 A1**
(43) Date of publication of application: **10.01.2018**
(21) Application number: 17178634.6
(22) Date of filing: 29.06.2017
(51) Int. Cl.: F02F 1/18, F02F 7/00, B23B 35/00

(54) **ENGINE AND METHOD OF MANUFACTURING CYLINDER BLOCK OF ENGINE**

(30) Priority: 04.07.2016 JP 2016132243
(71) Applicant: Yamaha Hatsudoki Kabushiki Kaisha, Iwata-shi Shizuoka 438-8501 (JP)
(72) Inventor: SAKURAI, Kenichi, Iwata-shi, Shizuoka 438-8501 (JP)
(74) Representative: Grünecker Patent- und Rechtsanwälte PartG mbB

(57) **Abstract**

An engine includes a cylinder block (1) including a cylinder hole (2), a crank shaft (6) as an offset crank, and a connecting rod (5) for connecting the piston (4) and the crank shaft (6). An inclined surface (11) is formed on the entire circumference of a crank-shaft-side opening edge of one end of the cylinder hole (2). When viewed in the axial direction of the crank shaft (6), a boundary line (34) between the inclined surface (11) and the cylinder hole (2) approaches the other end of the cylinder hole (2) as going toward an offset side on which the crank shaft (6) is offset from the central line of the cylinder hole (2). This invention can provide an offset crank type engine in which the entire circumference of the crank-shaft-side opening edge of the cylinder hole can be chamfered without adopting any arrangement having a bad influence on the sliding surface and posture of the piston, in order to avoid interference between the crank-shaft-side opening edge of the cylinder hole and the connecting rod.

## Description

The present invention relates to an engine in which a honing stone escape portion is formed in a cylinder block, and a method of manufacturing the cylinder block of the engine of this type.

Conventionally, a cylinder hole of an engine is processed by honing. The honing process is performed by moving a honing stone rotating in the cylinder hole back and forth along the central line of the cylinder hole. During the honing, the honing stone goes through the cylinder hole and projects by a predetermined length into a crank chamber from the cylinder hole. The honing stone should project into the crank chamber in order to evenly polish the cylinder hole over the entire length, thereby increasing the precision of the cylindricality of the cylinder hole.

A cylinder block of a multi-cylinder engine includes a cylinder wall with a cylinder hole, a crank case that forms a crank chamber together with an oil pan, and a bearing wall that extends toward a crank shaft from the ceiling wall of the crank case between cylinders. A cylinder-side half portion of a bearing for supporting the crank shaft is formed on the distal end portion of the bearing wall.

In a recent multi-cylinder engine, the cylinder spacing is narrowed as much as possible in order to achieve downsizing in the axial direction of the crank shaft. Therefore, the above-described bearing wall is often positioned close to the cylinder hole. When an engine cylinder block like this is formed by aluminum die casting, the bearing wall partially overlaps the cylinder hole when viewed in a direction parallel to the central line of the cylinder. This is because the whole bearing wall is formed to have the thickness of a bearing portion having the largest thickness so that the bearing wall is releasable from the metal mold, since, in aluminum die casting, a molten metal is injected into a metal mold at such a high speed and high pressure that it is difficult to use a sand core.

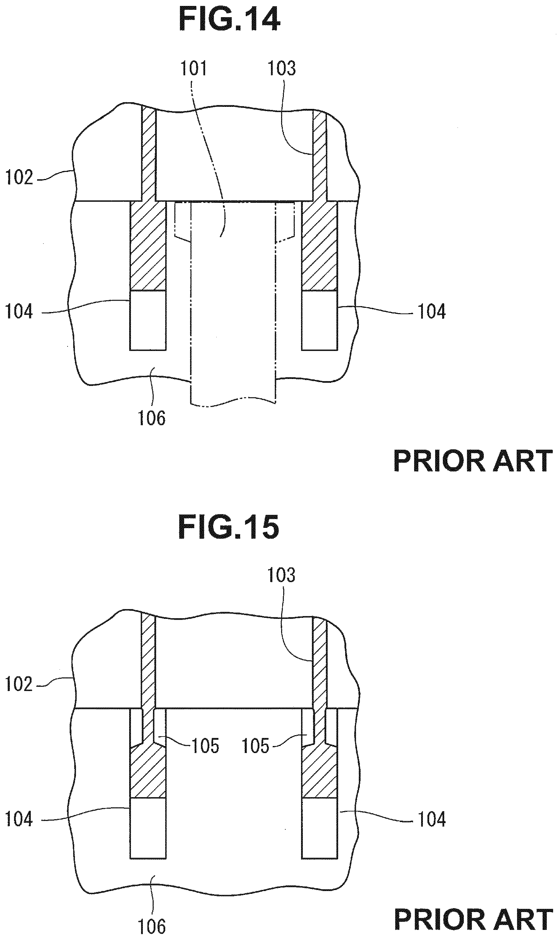

If the bearing wall extends toward the cylinder hole as described above, honing process cannot be performed without performing honing stone escape process on the bearing wall, as describe in, for example, Japanese Patent Laid-Open No. 2015-161189 (to be referred to as literature 1 hereinafter). As shown in Fig. 14, the honing stone escape process is performed by using a rotary cutting tool 101. Fig. 14 is a sectional view showing a part of a cylinder block 102 in an enlarged scale. In Fig. 14, reference numeral 103 denotes a cylinder hole; and 104, a bearing wall positioned between cylinders. The honing stone escape process is performed by inserting a rotary cutting tool 101 between the bearing walls 104, and rotating the rotary cutting tool 101 held in a predetermined position. The rotary cutting tool 101 has a retractable blade (not shown), and rotates with this blade being projected. The rotating blade cuts the bearing walls 104.

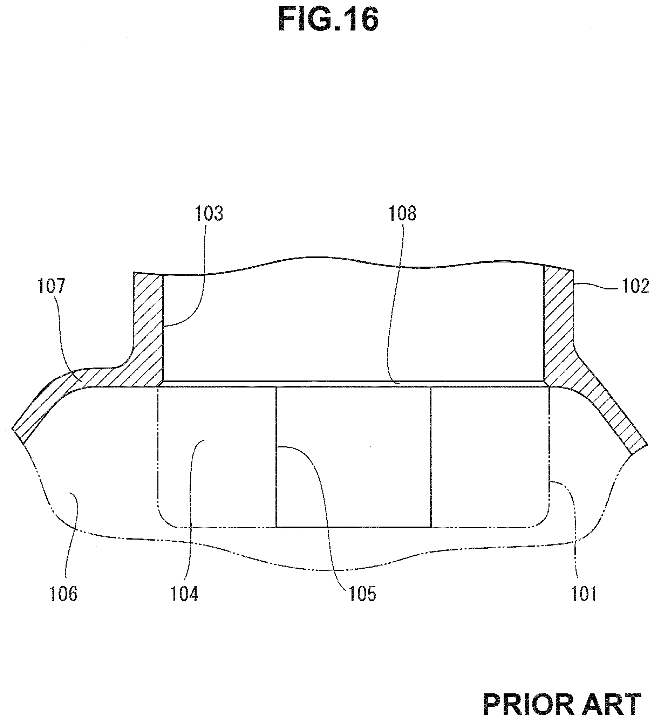

After the honing stone escape process, as shown in Fig. 15, some parts of the bearing walls 104 are partially removed to form honing stone escape portions 105 are formed as recesses on the bearing walls 104. In the honing stone escape process, as shown in Fig. 16, the rotary cutting tool 101 chamfers a crank-shaft-side opening edge of the cylinder hole 103. By the chamfering process, an inclined surface 108 is formd on the crank-shaft-side opening edge of the cylinder hole 103.

Also, some conventional multi-cylinder engines have an offset crank as a crank shaft. This offset crank is a crank shaft having an axis which is offset from the central line of the cylinder hole. In an engine using the offset crank, a connecting rod is biased in an offset direction of the crank shaft. In the offset direction, the spacing between the crank-shaft-side opening edge of the cylinder hole and the connecting rod is narrowed, and this may cause interference.

In the conventional engine of this type, the interference between the crank-shaft-side opening edge of the cylinder hole and the connecting rod is avoided by using the following method. Examples of the interference avoiding method are a method by which a recess for avoiding the connecting rod is integrally molded by casting on the crank-shaft-side opening edge of the cylinder hole, and a method which performs casting such that the position of the crank-shaft-side opening edge of the cylinder hole is raised over the entire circumference. The recess for avoiding the connecting rod is formed by using a metal mold for molding the cylinder block.

An offset crank type engine poses the following problem if the method of integrally molding the recess on the crank-shaft-side opening edge of the cylinder hole by casting is adopted in order to avoid the interference between the crank-shaft-side opening edge of the cylinder hole and the connecting rod. That is, when the crank-shaft-side opening edge of the cylinder hole is chamfered after casting, the formed inclined surface becomes intermittent by the recess, and a processing edge or burr forms in this intermittent portion.

If a piston goes back and forth in the cylinder hole with the processing edge or burr being formed as described above, the sliding surface of the skirt of the piston is easily damaged. If the sliding surface of the piston is damaged, defective lubrication may occur and cause piston seizure.

When casting is performed such that the position of the crank-shaft-side opening edge of the cylinder hole is raised over the entire circumference in order to avoid the interference between the opening edge and the connecting rod, the guide of the piston reduces near the bottom dead center, and the posture of the piston may become unstable and generate noise.

It is an object of the present invention to provide an engine and a method of manufacturing a cylinder block of an engine with a sliding surface and posture of a piston, in order to avoid interference between the crank-shaft-side opening edge of the cylinder hole and a connecting rod.

According to the present invention said object is solved by an engine according to the independent claim 1. Moreover, said object is solved by a method of manufacturing a cylinder block of an engine according to the independent claim 3. Preferred embodiments are laid down in the dependent claims.

Accordingly, it is provided an offset crank type engine in which the entire circumference of the crank-shaft-side opening edge of a cylinder hole can be chamfered without adopting any arrangement having a bad influence on the sliding surface and posture of a piston, in order to avoid interference between the crank-shaft-side opening edge of the cylinder hole and a connecting rod.

Accordingly, it is provided an engine that comprises a cylinder block including a cylinder hole into which a piston is movably fitted, a crank shaft as an offset crank, an axis of which is offset from a central line of the cylinder hole, and a connecting rod configured to connect the piston and the crank shaft to each other, wherein an inclined surface is formed on an entire circumference of a crank-shaft-side opening edge of the cylinder hole, and when viewed in an axial direction of the crank shaft, a boundary line between the inclined surface and the cylinder hole approaches the other end of the cylinder hole as going toward an offset side on which the crank shaft is offset from the central line.

Moreover, it is also provided an engine cylinder block manufacturing method, the engine comprising a cylinder block including a cylinder hole into which a piston is movably fitted, and a crank shaft as an offset crank, an axis of which is offset from a central line of the cylinder hole, the method including a chamfering step of performing chamfering on an entire circumference of a crank-shaft-side opening edge of the cylinder hole by using a cutter which rotates around an axis parallel to the central line, wherein the chamfering is performed by moving the cutter along the crank-shaft-side opening edge, and a moving amount of a rotation center of the cutter which moves in the chamfering step is larger on one side on which the crank shaft is offset from the central line of the cylinder hole, than on the other side, when viewed in a direction of the axis of the crank shaft.

Moreover, it is also provided an engine cylinder block manufacturing method, the engine comprising a cylinder block having a cylinder hole into which a piston is movably fitted, and a crank shaft as an offset crank, an axis of which is offset from a central line of the cylinder hole, the method including a chamfering step of performing chamfering on an entire circumference of a crank-shaft-side opening edge of the cylinder hole by using a cutter which rotates around an axis parallel to the central line, wherein the chamfering is performed in a state in which a rotation center of the cutter stays in a position biased in an offset direction of the crank shaft with respect to the central line.

### Brief Description of the Drawings

Fig. 1 is a sectional view of a cylinder block according to a preferred embodiment;
Fig. 2 is a sectional view for explaining the arrangement of the cylinder block;
Fig. 3 is a sectional view showing main parts in an enlarged scale;
Fig. 4 is a view showing the bottom surface of a bearing wall;
Fig. 5 is a sectional view showing the bearing wall sideways;
Fig. 6 is a plan view showing a cylinder wall in a state in which a cutter according to the first embodiment is inserted;
Fig. 7 is a perspective view showing a state in which a crank-shaft-side opening edge of a cylinder hole is viewed from the side of a crank chamber;
Fig. 8 is a flowchart for explaining a cylinder block manufacturing method;
Fig. 9 is a flowchart for explaining a chamfering step according to the first embodiment;
Fig. 10 is a plan view showing a cylinder wall in a state in which a cutter according to the second embodiment is inserted;
Fig. 11 is a flowchart for explaining a chamfering step according to the second embodiment;
Fig. 12 is a sectional view showing a bearing wall according to the third embodiment sideways;
Fig. 13 is a sectional view for explaining the arrangement of a cylinder block according to the fourth embodiment;
Fig. 14 is a sectional view showing a state before escape process is performed on a conventional bearing wall;
Fig. 15 is a sectional view showing a state after escape process is performed on the conventional bearing wall; and
Fig. 16 is a sectional view showing a state after the crank-shaft-side opening edge of a conventional cylinder hole is chamfered.

### Description of the Preferred Embodiments

### <First Embodiment>

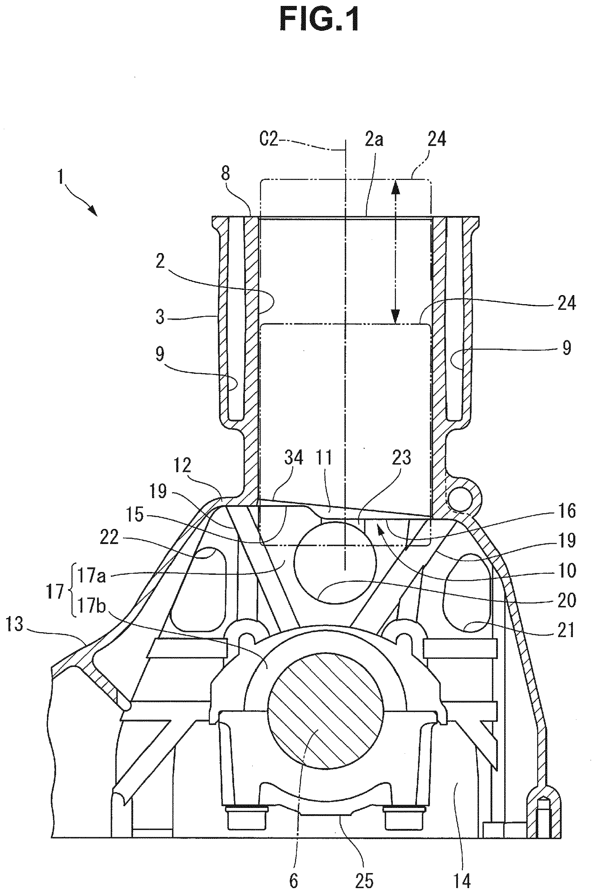

An embodiment of an engine and a method of manufacturing a cylinder block of the engine will be explained in detail below with reference to Figs. 1 to 9.

A cylinder block 1 shown in Fig. 1 is a cylinder block of a multi-cylinder engine, and formed into a predetermined shape by gravity die casting using cast iron as a material and a sand mold or core (not shown). The cylinder block 1 has three functional portions.

### <Arrangement of Cylinder Wall>

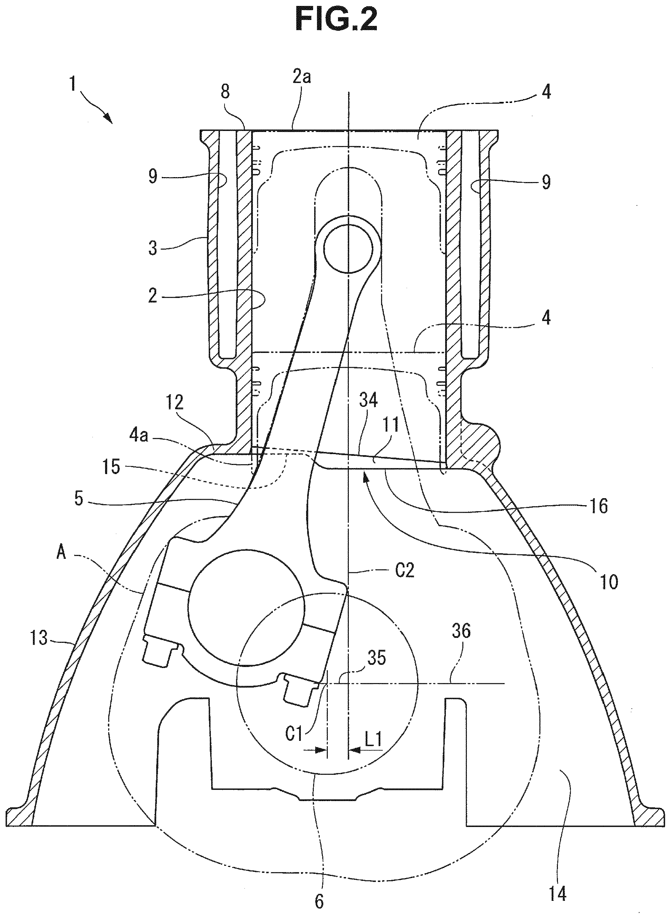

The first functional portion is a cylinder wall 3 having a plurality cylinder holes 2. As shown in Fig. 2, a piston 4 is movably fitted into the cylinder hole 2. Fig. 2 shows the piston 4 positioned in the top dead center, and the piston 4 positioned in the bottom dead center.

The piston 4 is connected to a crank shaft 6 by a connecting rod 5. Fig. 2 omits a crank web, crank pin, and the like of the crank shaft 6, and shows only a crank journal by the alternate long and two short dashed line.

The crank shaft 6 is a so-called offset crank. When viewed in the axial direction as shown in Fig. 2, an axis C1 of the crank shaft 6 is offset by a length L1 to one side (the left side in Fig. 2) with respect to a central line C2 of the cylinder hole 2. Therefore, the outermost moving locus of the connecting rod 5 has a shape biased to the left side in Fig. 2, as indicated by an alternate long and two short dashed line A in Fig. 2. In the following description, one side on which the crank shaft 6 is offset will simply be called "an offset side", and the side opposite to this direction will be called "the other side".

A mating surface 8 for attaching a cylinder head (not shown) is formed on one end portion (the upper end portion in Fig. 1) of the cylinder wall 3. An opening 2a of the cylinder hole 2, which is positioned on the side opposite to the crank shaft 6, is formed in the mating surface 8. For the sake of convenience, one end (the upper side in Figs. 1 and 2) of the cylinder wall 3 will be called "a cylinder head side", and the other end thereof will be called "a crank shaft side".

A cooling water passage 9 is formed in that portion of the cylinder wall 3, which covers the cylinder hole 2.

An inclined surface 11 is formed by chamfering (to be described later) on a portion which is the crank-shaft-side end portion of the cylinder wall 3 and is an crank-shaft-side opening edge 10 of the cylinder hole 2. Details of this chamfering will be described later. Note that this chamfering is performed before the cylinder hole 2 is honed.

### <Arrangement of Crank Case>

The second functional portion of the cylinder block 1 is a crank case 13 having a ceiling wall 12 connected to the crank-shaft-side end portion of the cylinder wall 3. The crank case 13 is formed into a boxy shape which opens toward the side opposite to the cylinder wall 3. This opening of the crank case 13 is closed with an oil pan (not shown). The crank case 13 and oil pan form a crank chamber 14 for accommodating the crank shaft 6.

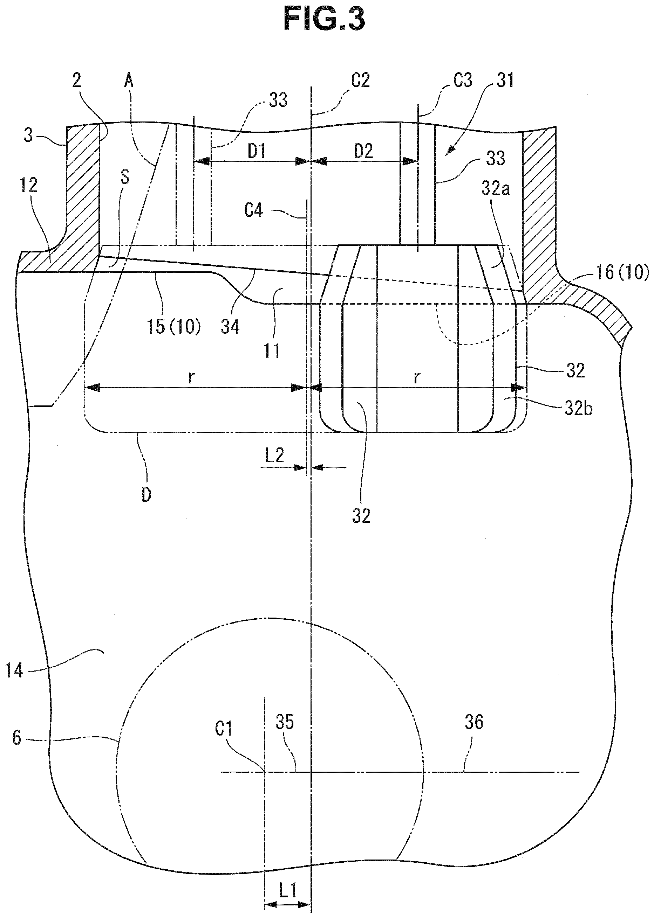

As shown in Figs. 1 to 3 and 7, a portion connecting the ceiling wall 12 and the crank-shaft-side end portion of the cylinder wall 3, in other words, a portion surrounding the crank-shaft-side opening edge 10 of the cylinder hole 2 is formed by a first wall 15 positioned on the offset side, and a second wall 16 positioned on the other side. The first and second walls 15 and 16 are formed into a predetermined shape by a mold for casting the cylinder block 1. As will be described in detail later, the first wall 15 does not contribute to guiding of the piston 4, and hence is positioned closer to the cylinder head side than the second wall 16. As shown in Fig. 3, since the first wall 15 is thus formed to be biased toward the cylinder head side, a space S is formed between the moving locus of the connecting rod 5 indicated by the alternate long and two short dashed line A and the first wall 15 (the crank-shaft-side opening edge 10 of the cylinder hole 2), when viewed in the axial direction of the crank shaft 6. Note that the length the first wall 15 is spaced apart from the second wall 16 toward the cylinder head side in the direction parallel to the central line C2 of the cylinder hole 2 is a length which does not spoil the function of guiding a skirt 4a (see Fig. 2) of the piston 4 by the wall surface of the cylinder hole 2.

### <Arrangement of Bearing Wall>

As shown in Fig. 1, the third functional portion is a bearing wall 17 extending from the ceiling wall 12 toward the crank shaft 6. As shown in Fig. 1, the bearing portion 17 includes a plate-like portion 17a extending in a direction perpendicular to the axis of the crank shaft 6, and a bearing portion 17b formed in the crank-shaft-side end portion of the plate-like portion 17a.

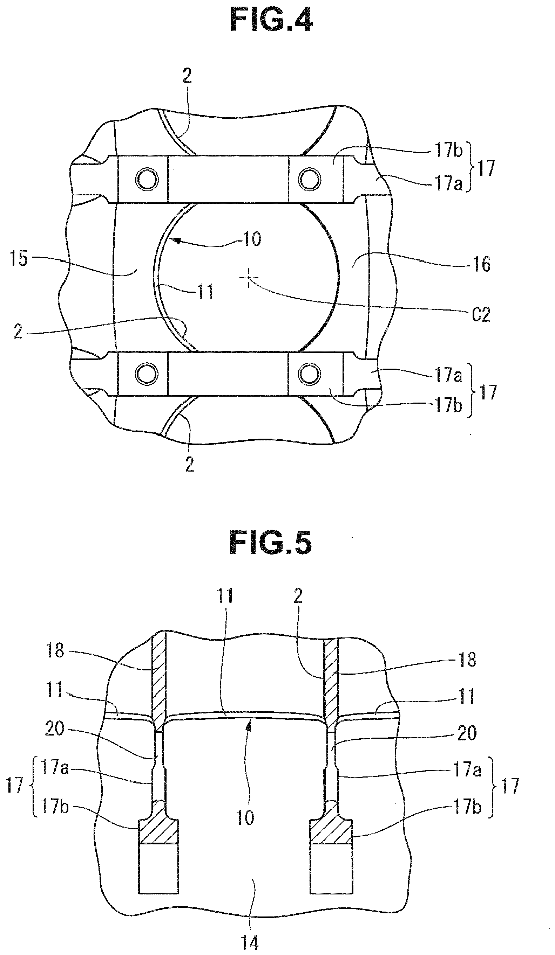

As shown in Fig. 4, the bearing wall 17 is formed between the cylinder holes 2 adjacent to each other when viewed in the direction parallel to the central axis C2 of the cylinder hole 2. As shown in Fig. 5, the plate-like portion 17a of the bearing wall 17 is formed to have a thickness equal to that of a partition 18 between the cylinder holes 2. The partition 18 is a part of the cylinder wall 3.

As shown in Fig. 1, a plurality of reinforcing ribs 19 are integrated with the plate-like portion 17a according to this embodiment. Also, the plate-like portion 17a is formed to have a size which partitions the crank chamber 14 for the individual cylinders. First to third communication holes 20 to 22 which allow those inner spaces of the crank chamber 14, which are partitioned for the individual cylinders, to communicate with each other are formed in the plate-like portion 17a.

A honing stone escape portion 23 is formed in the cylinder-head-side end portion of the plate-like portion 17a, which overlaps the central line C2 of the cylinder hole 2 when viewed in the axial direction of the crank shaft 6 as shown in Fig. 1. The honing stone escape portion 23 is a recess for avoiding contact with a honing stone 24 inserted into the cylinder hole 2 in order to perform honing. The honing stone escape portion 23 is formed when performing chamfering (to be described later) on the crank-shaft-side opening edge 10 of the cylinder hole 2. The honing stone escape portion 23 and a chamfered portion (to be described later) can be formed by using a sand core during casting. However, the surfaces are rough as cast and may damage the piston 4, so cutting is performed on them.

As shown in Fig. 5, the bearing portion 17b is formed to be thicker than the plate-like portion 17a. As shown in Fig. 4, therefore, the bearing portion 17b partially overlaps the cylinder hole 2 when viewed in the direction parallel to the central line C2 of the cylinder hole 2. As shown in Fig. 1, a bearing cap 25 is attached to the bearing portion 17b. The crank shaft 6 is sandwiched between the bearing portion 17b and the bearing cap 25 and rotatably supported by these members.

### <Explanation of Chamfering>

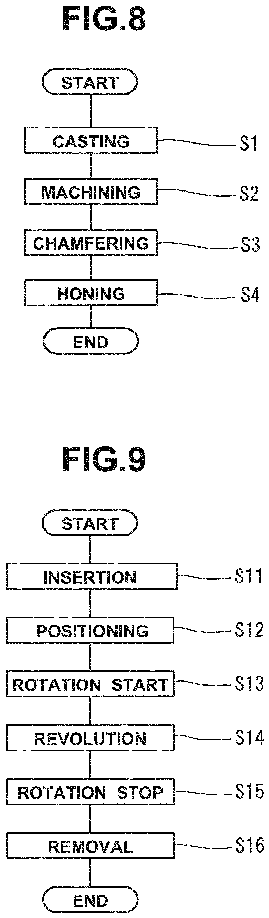

As shown in a flowchart of Fig. 8, chamfering performed on the crank-shaft-side opening edge 10 of the cylinder hole 2 is performed in chamfering step S3 after casting step S1 and machining step S2. This flowchart of Fig. 8 shows an example of a method of manufacturing the cylinder block 1. The cylinder block 1 is manufactured by performing casting step S1, chamfering step S3, and honing step S4 in this order. Casting step S1 is a step of molding the cylinder block 1 by casting. Machining step S2 is a step of cutting mating surfaces, passages, holes, and the like by machining, and performing threading. Machining step S2 includes prepared hole machining before honing.

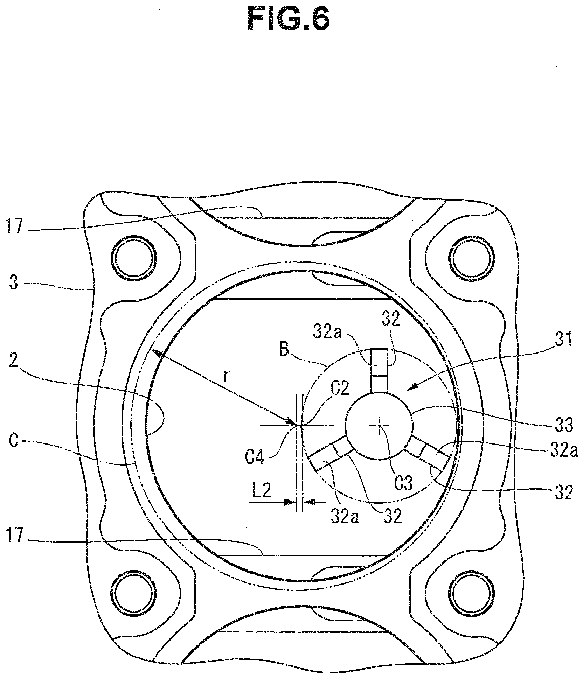

Chamfering step S3 is performed by using a cutter 31 shown in Figs. 3 and 6. The cutter 31 includes a plurality of blades 32, and a rotational shaft 33 for supporting the blades 32. The rotational shaft 33 is driven by a driving device (not shown), and rotates around an axis C3 (see Fig. 3) parallel to the central line C2 of the cylinder hole 2.

The cutter 31 shown in Figs. 3 and 6 has three blades 32. However, the number of blades 32 is not limited to three and can be changed as needed. The plurality of blades 32 can be arranged so as to extend, e.g., in the radial direction from the rotational shaft 33. Also, the blades 32 are formed to have a size which can be inserted into the cylinder hole 2 from the cylinder-head-side end portion.

When the cutter 31 rotates around the rotational shaft 33, the rotation locus forms a circle smaller than the cylinder hole 2 as indicated by an alternate long and two short dashed line B in Fig. 6 when viewed in the axial direction of the rotational shaft 33.

As shown in Fig. 3, the blade 32 has a predetermined length in the direction parallel to the central line C2 of the cylinder hole 2, and includes an inclining chamfering portion 32a formed on one end portion as the cylinder head side, and an escape processing portion 32b extending toward the other end portion from the chamfering portion 32a.

The chamfering portion 32a so inclines as to be gradually positioned toward the other end portion of the blade 32 in the direction away from the axis C3 of the cutter 31. The escape processing portion 32b extends parallel to the central line C2 of the cylinder hole 2. The length of the escape processing portion 32b matches the size and reciprocation stroke of the honing stone 24 to be used in honing step S4 next to chamfering step S3. The length of the escape portion 32b is desirably larger than the length the honing stone 24 projects toward the crank shaft 6 from the cylinder hole 2.

In chamfering step S3, a plurality of steps shown in a flowchart of Fig. 9 are executed in order. When performing chamfering step S3, insertion step S11 is first performed, i.e., the cutter 31 is inserted into the cylinder hole 2 from the opening of the cylinder-head-side end portion. In positioning step S12, the cutter 31 is positioned such that the chamfered portion 32a is positioned in the boundary between the cylinder hole 2 and the crank chamber 14, as shown in Fig. 3. Note that Fig. 3 shows the cylinder block 1 in a state after chamfering step S3.

Subsequently, in rotation start step S13, the driving device drives the rotational shaft 33, and the cutter 31 rotates around the rotational shaft 33.

In revolution step S14 after that, the cutter 31 moves along a predetermined moving path. This movement is performed by the driving device by changing the position of the rotational shaft 33 in the direction perpendicular to the central line C2 of the cylinder hole 2.

When viewed in the axial direction of the rotatable shaft 33, the moving path of the cutter 31 is a path by which a circle indicated by an alternate long and two short dashed line C in Fig. 6 is the moving locus. When viewed in the axial direction of the crank shaft 6, this moving path is a path which forms a moving locus indicated by an alternate long and two short dashed line D in Fig. 3. A center C4 of the circle indicated by the alternate long and two short dashed line C in Fig. 6 is in the same position as that of the center (the position of the central line C2) of the cylinder hole 2 in the axial direction of the crank shaft 6, and spaced apart by a length L2 toward the offset side (the left side in Fig. 6) from the center of the cylinder hole 2. As shown in Fig. 3, a radius r of the circle as the moving locus indicated by the alternate long and two short dashed line C in Fig. 6 is set at a radius by which the chamfering portion 32a of the blade 32 can cut the crank-shaft-side opening edge 10 of the cylinder hole 2 on the offset side (the left side in Fig. 3) and on the opposite side.

As shown in Fig. 3, when viewed in the axial direction of the crank shaft 6, the moving amount of the rotation center (the position of the axis C3) of the cutter 31 which moves in revolution step S14 is D1 on the offset side (the left side in Fig. 3), and D2 on the other side, with respect to the central line C2 of the cylinder hole 2. The moving amount D1 is larger than the moving amount D2. That is, the rotation center of the cutter 31 moves to the offset side longer than to the other side with respect to the central line C2 of the cylinder hole 2.

As described above, since the cutter 31 in a rotating state so moves (revolves) as to form the moving locus indicated by the alternate long and two short dashed line C in Fig. 6, the chamfering portion 32a cuts the crank-shaft-side opening edge 10 of the cylinder hole 2 over the entire circumference. When revolution step S14 is performed, therefore, the cutter 31 moves along the crank-shaft-side opening edge 10 of the cylinder hole 2, and chamfers the whole crank-shaft-side opening edge 10. Since the crank-shaft-side opening edge 10 of the cylinder hole 2 is thus chamfered, the inclined surface 11 is formed on this opening edge over the entire circumference.

A boundary line 34 between the inclined surface 11 and the cylinder hole 2 inclines upward to the left in Fig. 3. As shown in Fig. 2, the inclining direction of the boundary line 34 is a direction in which the boundary line 34 gradually approaches the opening 2a in the other end of the cylinder hole 2 toward the offset side on which the crank shaft 6 is offset from the central line C2 of the cylinder hole 2, when viewed in the axial direction of the crank shaft 6. In other words, the inclining direction of the boundary line 34 is a direction in which, as shown in Fig. 3, the boundary line 34 approaches a virtual line 36 including a perpendicular 35 extending from the axis C1 of the crank shaft 6 to the central line C2 of the cylinder hole 2, in the direction from the offset side to the other side (the right side in Fig. 3) when viewed in the axial direction of the crank shaft 6.

As described above, the end portion on the offset side of the boundary line 34 of the inclined surface 11 approaches the opening 2a in the other end of the cylinder hole 2. This means that the spacing between the crank-shaft-side opening edge 10 of the cylinder hole 2 and the connecting rod 5 increases.

The width (the width in the vertical direction in Fig. 3) of the inclined surface 11 in the direction parallel to the central line C2 of the cylinder hole 2 gradually increases toward the offset side. The reason for this is that the inclined chamfering portion 32a of the cutter 31 gradually cuts the crank-shaft-side opening edge 10 on the offset side deeply in the radial direction. Note that the first wall 15 is biased toward the cylinder head more than the second wall 16, so the width of the inclined surface 11 shown in Fig. 3 decreases halfway.

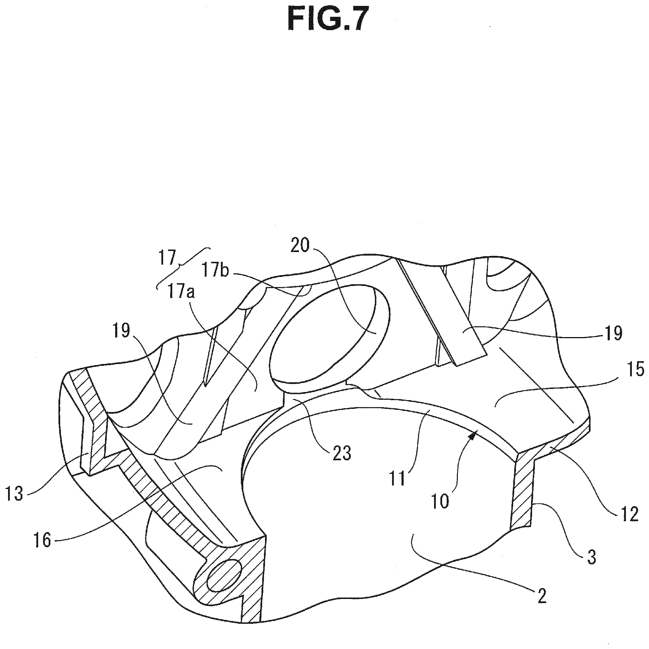

Also, since in revolution step S14 the cutter 31 moves along the moving locus indicated by the alternate long and two short dashed line C in Fig. 6, the bearing wall 17 is partially cut by the escape processing portion 32b of the cutter 31, thereby forming the honing stone escape portion 23 on the bearing wall 17. That is, in revolution step S14, the above-described inclined surface 11 and the honing stone escape portion 23 of the bearing wall 17 are simultaneously processed by the cutter 31. As shown in Figs. 1 and 7, the processed inclined surface 11 is so connected as to continue to the honing stone escape portion 23.

After the cutter 31 revolves at least once along the above-described moving locus in revolution step S14, the process advances to rotation stop step S15, and the driving device stops driving the rotational shaft 33, thereby stopping the cutter 31. In removal step S16 after that, the cutter 31 is moved from the position of rotation stop to a removal position on the side of the central line C2 of the cylinder hole 2, and removed outside the cylinder block 1 through the cylinder hole 2. Chamfering step S3 is complete when the cutter 31 thus retracts.

As shown in Fig. 8, honing step S4 is performed after chamfering step S3. In honing step S4, the honing stone 24 goes back and forth in the cylinder hole 2 while rotating. In this embodiment, the honing stone 24 does not interfere with the bearing wall 17 because the honing stone escape portion 23 is formed on the bearing wall 17.

### <Explanation of Effects of First Embodiment>

In this embodiment, as shown in Figs. 1 to 3, the inclined surface 11 formed on the crank-shaft-side opening edge 10 of the cylinder hole 2 so inclines as to gradually approach the opening 2a in the other end (the cylinder head side) of the cylinder hole 2 in the direction of the offset side, when viewed in the axial direction of the crank shaft 6. The end portion of the inclined surface 11 on the offset side is also a portion to which the connecting rod 5 comes closest. The boundary line 34 of the inclined surface 11 is close to the opening in the other end of the cylinder hole 2, and this means that the spacing between the crank-shaft-side opening edge 10 of the cylinder hole 2 and the connecting rod 5 increases. This makes it possible to avoid interference between the crank-shaft-side opening edge 10 of the cylinder hole 2 and the connecting rod 5 by the inclined surface 11.

Also, the above-described boundary line 34 indicates a position corresponding to the limit of the range within which the piston 4 is guided near the bottom dead center. That is, since only the guide of the piston 4 near the bottom dead center gradually reduces toward the offset side, the posture of the piston 4 does not become unstable near the bottom dead center.

Furthermore, in this embodiment, the whole circumference of the crank-shaft-side opening edge 10 of the cylinder hole 2 is chamfered. Therefore, the skirt 4a of the piston 4 passing through this opening edge is not damaged by a burr or fine projection.

Accordingly, this embodiment can provide an offset crank type engine in which the whole circumference of the crank-shaft-side opening edge 10 of the cylinder hole 2 can be chamfered without adopting any inconvenient arrangement when avoiding interference between the crank-shaft-side opening edge 10 of the cylinder hole 2 and the connecting rod 5. The "inconvenient arrangement" is an arrangement which exerts a bad influence on the sliding surface or posture of the piston 4, e.g., the formation of a recess in the crank-shaft-side opening edge or raising the position of the crank-shaft-side opening edge over the entire circumference as in a conventional arrangement.

The inclined surface 11 according to this embodiment is so connected as to continue to the honing stone escape portion 23. This makes it possible to reliably prevent contact with the bearing wall 17 when the piston 4 or honing stone 24 projects toward the crank shaft 6 from the cylinder hole 2.

In this embodiment, therefore, the bearing wall 17 can be arranged close to the central line C2 of the cylinder 2 while avoiding interference with the piston 4 or honing stone 24, so the cylinder block 1 can be shortened in the axial direction of the crank shaft 6. Consequently, this embodiment can provide an engine formed to be compact in the axial direction of the crank shaft 6.

In this embodiment, the piston 4 does not come in contact with that portion of the cylinder hole 2, which is closer to the crank shaft side than the boundary line 34 of the inclined surface 11, so this portion has no function of guiding the piston 4 near the bottom dead center. In the cylinder block 1 of this embodiment, the first wall 15 positioned on the offset side is formed in the position biased to the cylinder head side more than the second wall 16.

This arrangement shortens the time required for the cutting process when forming the inclined surface 11 compared to an arrangement in which the first wall 15 and second wall 16 are formed to have the same height, so the productivity increases.

Chamfering according to this embodiment is performed by using the cutter 31 having a diameter smaller than the diameter of the cylinder hole 2. Therefore, the cutter 31 can be inserted into the cylinder hole 2 from the cylinder-head-side opening of the cylinder hole 2, and hence can be positioned with high accuracy by using the cylinder-head-side mating surface 8 of the cylinder block 1. As a consequence, the crank-shaft-side opening edge 10 of the cylinder hole 2 can accurately be chamfered.

Chamfering step S3 according to this embodiment is performed by using the cutter 31 having a predetermined length in the direction parallel to the central line C2 of the cylinder 2. In chamfering step S3, the crank-shaft-side opening edge 10 of the cylinder 2 and the bearing wall 17 are simultaneously processed by the cutter 31.

In this embodiment, therefore, it is possible to efficiently perform chamfering on the crank-shaft-side opening edge 10 of the cylinder hole 2, and the process of forming the honing stone escape portion 23 on the bearing wall 17. This makes it possible to provide a highly productive engine cylinder block manufacturing method.

### <Second Embodiment>

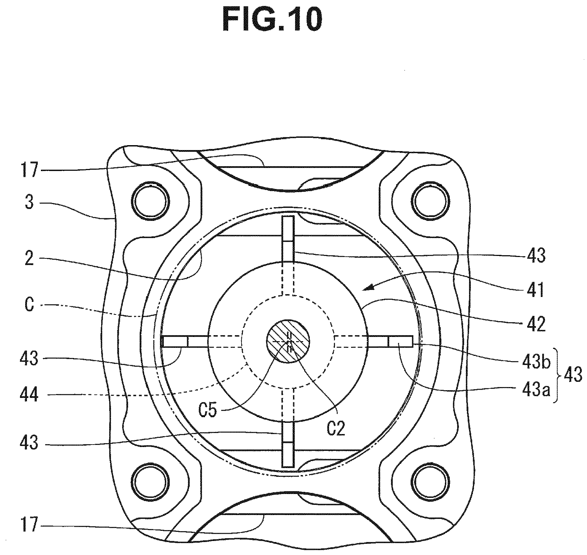

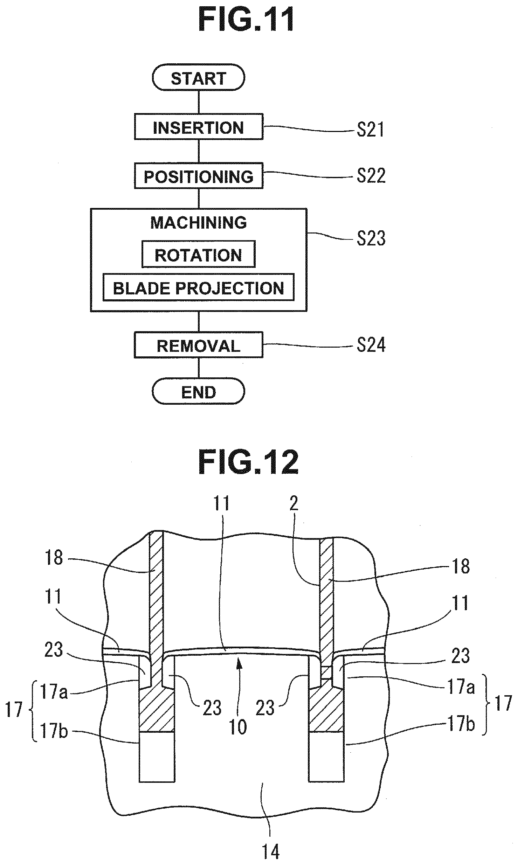

The chamfering step (chamfering and the processing of the honing stone escape portion) can also be performed as shown in Figs. 10 and 11. Referring to Figs. 10 and 11, the same reference numerals as in Figs. 1 to 9 denote the same members as explained with reference to Figs. 1 to 9 or similar members, and a detailed explanation thereof will suitably be omitted.

In a cutter 41 (see Fig. 10) used in chamfering step S3 according to this embodiment, a plurality of blades 43 radially projecting from a rotatable shaft 42 can move in the radial direction of the rotatable shaft 42.

An axis C5 of the rotatable shaft 42 is arranged in a processing position spaced apart by a predetermined length to the offset side (the left side in Fig. 10) from a central axis C2 of a cylinder hole 2, and the rotatable shaft 42 rotates by being driven by a driving device (not shown) in this processing position.

Although details are not shown in the drawings, the plurality of blades 43 include a chamfering portion 43a and an escape processing portion 43b like the blade 32 disclosed in the first embodiment. The blades 43 are pushed outward in the radial direction by a pushing mechanism 44 formed in the rotatable shaft 42, and project outward in the radiation direction from the rotatable shaft 42 while being supported by the rotatable shaft 42. As the pushing mechanism 44, it is possible to use, e.g., a pushing mechanism disclosed in literature 1.

Chamfering step S3 according to this embodiment is performed as shown in a flowchart of Fig. 11. When performing chamfering step S3, the cutter 41 is first inserted into the cylinder hole 2 from the cylinder head side (insertion step S21), and positioned in the boundary portion between the cylinder hole 2 and a crank chamber 14 (positioning step S22). In positioning step S22, the rotatable shaft 42 of the cutter 41 is positioned in the above-described processing position.

In machining step S23 after that, the cutter 41 rotates, and the blades 43 project outward in the radial direction from the rotatable shaft 42. Since the blades 43 thus project from the rotatable shaft 42, the rotating blades 43 cut a crank-shaft-side opening edge 10 of the cylinder hole 2, thereby forming an inclined surface 11. This chamfering is performed in a state in which the rotation center (the axis C5) of the cutter 41 is stopped in a position biased to the offset side from the central line C2 of the cylinder hole 2.

Also, in machining step S23, the escape processing portion 43b of the blade 43 cuts a bearing wall 17, thereby forming a honing stone escape portion 23 on the shaft wall 17. An alternate long and two short dashed line D in Fig. 3 indicates the outer shape of the cutter 41 when this machining is complete.

After machining step S23 is complete, the rotation of the cutter 41 stops, and the blades 43 of the cutter 41 retract inward in the radial direction of the rotatable shaft 42. Then, in removal step S24, the cutter 41 is removed outside the cylinder block 1 through the cylinder hole 2. Chamfering step S3 is complete when the cutter 41 thus retracts.

When compared to the method (the method according to the first embodiment) of performing chamfering while moving the cutter 41, this embodiment can shorten the processing time because the position of the cutter 41 remains unchanged. Therefore, this embodiment can provide a highly productive engine cylinder block manufacturing method.

### <Third Embodiment>

The present teaching is also applicable to an engine including a cylinder block formed by aluminum die casting. Fig. 12 shows a bearing wall 17 of a cylinder block 1 formed by aluminum die casting. Referring to Fig. 12, the same reference numerals as in Figs. 1 to 9 denote the same members as explained with reference to Figs. 1 to 9 or similar members, and a detailed explanation thereof will suitably be omitted.

Immediately after die casting, a plate-like portion 17a of the bearing wall 17 shown in Fig. 12 is formed into a shape releasable from a metal mold, as explained with reference to Fig. 14 as the related art at the beginning of this specification, and is so formed as to have a thickness equal to or larger than that of a bearing portion 17b. A honing stone escape portion 23 is formed on the plate-like portion 17a by being cut by a cutter (not shown) as explained in the first or second embodiment. Also, an inclined surface 11 is formed on a crank-shaft-side opening edge 10 of a cylinder hole 2.

The present teaching is thus also applicable to an engine including the cylinder block 1 formed by aluminum die casting, and can achieve the same effects as those obtained by adopting the above-described embodiments.

### <Fourth Embodiment>

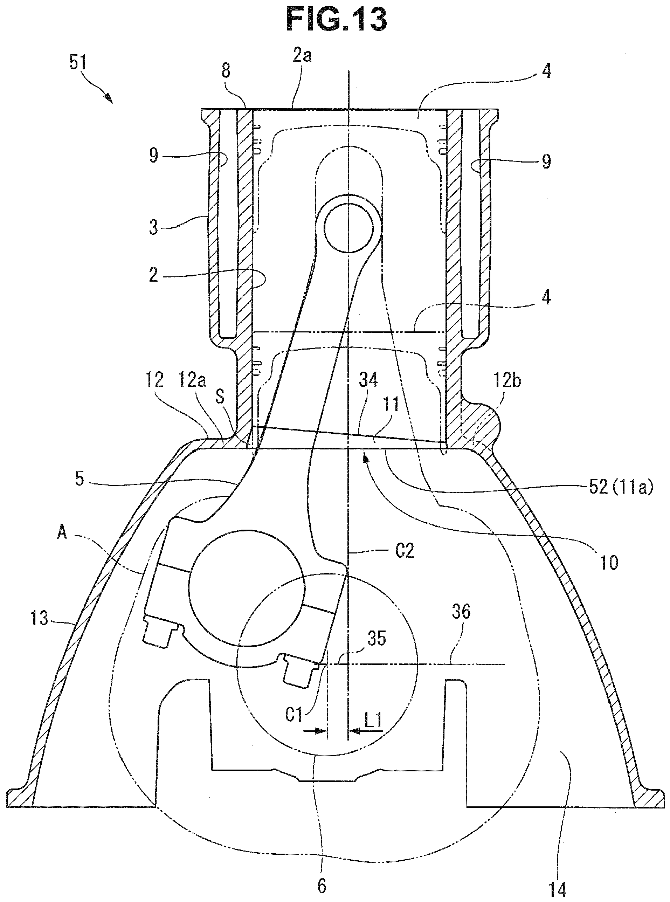

The present teaching can also provide an arranged as shown in Fig. 13. Referring to Fig. 13, the same reference numerals as in Figs. 1 to 12 denote the same members as explained with reference to Figs. 1 to 12 or similar members, and a detailed explanation thereof will suitably be omitted.

In a cylinder block 51 shown in Fig. 13, a portion surrounding a crank-shaft-side opening edge 10 of a cylinder hole 2 differs from that of the cylinder block 1 according to the above-described embodiments, and the rest is the same.

The portion surrounding the crank-shaft-side opening edge 10 of the cylinder hole 2 is formed by a flat third wall 52. The thickness of the third wall 52 is constant.

Accordingly, a ceiling wall 12 of a crank case 13 is formed to have practically the same height in one end portion 12a as the offset side and another end portion 12b, when viewed in the axial direction of a crank shaft 6. The "height" herein mentioned is equivalent to a position in a direction parallel to a central line C2 of the cylinder hole 2.

Also, since the third wall 52 is flat, an edge 11 a of an inclined surface 11 on the crank shaft side linearly extends between the offset side and the other side when viewed in the axial direction of the crank shaft 6. The inclined surface 11 can be formed by using a cutter (not shown) as explained in the first or second embodiment.

Even when the crank-shaft-side opening edge 10 of the cylinder hole 2 opens to the flat third wall 52 as described above, a space S is formed between the inclined surface 11 and a connecting rod 5, so interference between the cylinder hole 2 and the connecting rod 5 can be avoided. Consequently, the same effects as those obtained by adopting the above-described embodiments can be obtained.

According to the present teaching, the connecting rod comes closest to the end portion of the inclined surface on the offset side. The boundary line of this inclined surface is close to the opening in the other end of the cylinder hole, and this means that the spacing between the crank-shaft-side opening edge of the cylinder hold and the connecting rod increases. This makes it possible to avoid interference between the crank-shaft-side opening edge of the cylinder hole and the connecting rod by the inclined surface.

Also, the above-described boundary line indicates a position corresponding to the limit of the range within which the piston is guided near the bottom dead center. That is, since only the guide of the piston near the bottom dead center gradually reduces toward the offset side, the posture of the piston does not become unstable near the bottom dead center.

Furthermore, according to the present teaching, the whole circumference of the crank-shaft-side opening edge of the cylinder hole is chamfered. Therefore, the skirt of the piston passing through this opening edge is not damaged by a burr or fine projection.

Accordingly, the present teaching can provide an offset crank type engine in which the whole circumference of the crank-shaft-side opening edge of the cylinder hole can be chamfered without adopting any arrangement which exerts a bad influence on the sliding surface or posture of the piston, e.g., the formation of a recess in the crank-shaft-side opening edge or raising the position of the crank-shaft-side opening edge over the entire circumference as in a conventional arrangement, when avoiding interference between the crank-shaft-side opening edge of the cylinder hole and the connecting rod.

In an engine cylinder block manufacturing method which performs chamfering by moving a rotating cutter along the crank-shaft-side opening edge of the cylinder hole, a cutter having a diameter smaller than that of the cylinder hole can be used. Since, therefore, the cutter can be inserted into the cylinder hole from that opening of the cylinder hole, which is opposite to the crank shaft, the cutter can be positioned with high accuracy by using the cylinder-head-side mating surface of the cylinder block. As a consequence, the crank-shaft-side opening edge of the cylinder hole can accurately be chamfered.

In a cylinder block manufacturing method which performs chamfering by rotating a cutter in a state in which the rotation center of the rotating cutter is stopped in a position biased in the offset direction of the crank shaft from the central line of the cylinder hole, the processing time can be shortened compared to a method of performing chamfering while moving the cutter. This makes it possible to provide a highly productive engine cylinder block manufacturing method.

## Claims

1. An engine comprising:
a cylinder block (1, 51) including a cylinder hole (2) into which a piston (4) is movably fitted;
a crank shaft (6) as an offset crank, an axis (C1) of which is offset from a central line (C2) of the cylinder hole (2); and
a connecting rod (5) configured to connect the piston (4) and the crank shaft (6) to each other,
wherein an inclined surface (11) is formed on an entire circumference of a crank-shaft-side opening edge (10) of one end of the cylinder hole (2), and
when viewed in an axial direction of the crank shaft (6), a boundary line (34) between the inclined surface (11) and the cylinder hole (2) approaches the other end of the cylinder hole (2) as going toward an offset side on which the crank shaft (6) is offset from the central line (C2).

2. An engine according to claim 1, wherein the cylinder block (1, 51) includes:
a cylinder wall (3) including the cylinder hole (2),
a crank case (13) which includes a ceiling wall (12) connected to the cylinder wall (3), and forms a crank chamber (14), and
a bearing wall (17) which extends from the ceiling wall (12) to the crank shaft (6), and supports a cylinder-side half portion of the crank shaft (6),
wherein a honing stone escape portion (23) is formed on the bearing wall (17), the honing stone escape portion (23) is configured to allow a honing stone (24) to be inserted into the cylinder hole (2) without contacting the bearing wall (17), and
the inclined surface (11) is connected to continue to the honing stone escape portion (23).

3. A method of manufacturing a cylinder block of an engine, the engine comprising
a cylinder block (1, 51) including a cylinder hole (2) into which a piston (5) is movably fitted, and
a crank shaft (6) as an offset crank, an axis (C1) of which is offset from a central line (C2) of the cylinder hole (2),
the method comprising a chamfering step (S2) of performing chamfering on an entire circumference of a crank-shaft-side opening edge (10) of one end of the cylinder hole (2) by using a cutter (31,41) which rotates around an axis parallel to the central line (C2), wherein
the chamfering is performed by moving the cutter (31) along the crank-shaft-side opening edge (10), and
a moving amount of a rotation center of the cutter (31) which moves in the chamfering step (S2) is larger on one side on which the crank shaft (6) is offset from the central line (C2) of the cylinder hole (2), than on the other side, when viewed in a direction of the axis (C1) of the crank shaft (6), or
the chamfering is performed in a state in which a rotation center of the cutter (41) stays in a position biased in an offset direction of the crank shaft (6) with respect to the central line (C2).

4. A method according to claim 3, wherein the cylinder block (1, 51) includes
a cylinder wall (3) including the cylinder hole (2),
a crank case (13) which includes a ceiling wall (12) connected to the cylinder wall (3), and forms a crank chamber (14), and
a bearing wall (17) which extends from the ceiling wall (12) to the crank shaft (6), and supports a cylinder-side half portion of the crank shaft (6),
the chamfering step (S2) is performed by using the cutter (41) having a predetermined length in a direction parallel to the central line (C2), and
in the chamfering step (S2), the opening edge (10) and the bearing wall (17) are simultaneously processed by the cutter (41).
